# EUROPEAN PATENT APPLICATION

(11) **EP 4 489 175 A1**
(43) Date of publication of application: **08.01.2025**
(21) Application number: 23763587.5
(22) Date of filing: 03.03.2023
(51) Int. Cl.: H01M 10/26, H01M 4/42, H01M 4/66, H01M 4/80, H01M 10/28, H01M 10/36

(54) **SECONDARY BATTERY HAVING ZINC NEGATIVE ELECTRODE**

(30) Priority: 03.03.2022 JP 2022032828
(71) Applicant: National University Corporation Chiba University, Chiba-shi, Chiba 263-8522 (JP); Tomoegawa Corporation, Tokyo 104-8335 (JP)
(72) Inventor: HOSHINO, Katsuyoshi, Chiba-shi, Chiba 263-8522 (JP); TSUKADA, Satoru, Chiba-shi, Chiba 263-8522 (JP); NAKAMURA, Keita, Chiba-shi, Chiba 263-8522 (JP); OHARA, Kazuki, Chiba-shi, Chiba 263-8522 (JP); MURAMATSU, Daisuke, Shizuoka-shi, Shizuoka 421-0192 (JP)
(74) Representative: Hoffmann Eitle
(86) International application number: PCT/JP2023/008174
(87) International publication number: WO 2023/167330

(57) **Abstract**

Provided is a secondary battery having a zinc negative electrode enhanced in charge/discharge continuity. The secondary battery 10 having a zinc negative electrode according to an embodiment includes a positive electrode 20 having a metal fiber sheet, a negative electrode 30 containing zinc, and an electrolytic solution 40 having at least one or more types of supporting electrolytes dissolved therein. The total concentration of the supporting electrolytes is 5 mass% or more and 50 mass% or less based on the entire electrolytic solution.

## Description

### Technical Field

The present invention relates to a secondary battery having a zinc negative electrode.

### Background Art

During the study of various power storage devices as next-generation lithium ion batteries, zinc has attracted attention as a promising material for use in negative electrodes. Zinc is an element having a property of reversibly mediating an electrochemical reaction and large theoretical capacity. Because of this, a secondary battery having a zinc negative electrode (also referred to as an aqueous zinc-based storage battery) has the potential to be a new power storage device in place of the lithium ion battery.

### Citation List

### Non Patent Literature

Non Patent Literature 1: Materials Today Energy, 15 (2020), 100370

### Summary of Invention

### Technical Problem

In a secondary battery having a zinc negative electrode using zinc for a negative electrode, it is a problem to suppress deterioration of zinc and enhance charge/discharge continuity.

In view of the above problems, an object of the present invention is to provide a secondary battery having a zinc negative electrode enhanced in charge/discharge continuity.

### Solution to Problem

In an aspect, the present invention provides a secondary battery having a zinc negative electrode. The secondary battery having a zinc negative electrode has a positive electrode having a metal fiber sheet, a negative electrode containing zinc, and an electrolytic solution having at least one or more types of supporting electrolytes dissolved therein, in which a total concentration of the supporting electrolytes is 5 mass% or more and 50 mass% or less based on the entire electrolytic solution.

In the secondary battery having a zinc negative electrode of the above aspect, at least one of the supporting electrolytes preferably satisfies the following (a).
(a) A valence V of an anion derived from the supporting electrolyte is 2 or more.

The anion derived from the supporting electrolyte may be selected from the group consisting of a sulfate ion, a carbonate ion, a nitrate ion, a sulfite ion, a perchlorate ion, a tetrafluoroborate ion, and a hexafluorophosphate ion, and the cation derived from the supporting electrolyte may be selected from the group consisting of a lithium ion, a sodium ion, a potassium ion, a calcium ion, and a zinc ion.

The pH of the electrolytic solution may be 13 or more, or 4 or more and less than 7.

When the pH of the electrolytic solution is 13 or more, the electrolytic solution may contain KOH and K₂CO₃.

When the pH of the electrolytic solution is 4 or more and less than 7, the electrolytic solution may contain zinc sulfate.

A metal nanowire may be electrically connected to the metal fiber sheet.

One of the end portions of the metal nanowire may be fixed to the metal fiber sheet.

The metal nanowire may be formed of one or more metals selected from the group consisting of cobalt, copper, and silver.

The metal fiber sheet may be formed of copper.

A metal oxide film may be formed on a surface of the metal fiber sheet.

### Advantageous Effects of Invention

According to the present invention, it is possible to provide a technique relating to a secondary battery having a zinc negative electrode enhanced in charge/discharge continuity.

### Brief Description of Drawings

Fig. 1 is a schematic view of a secondary battery having a zinc negative electrode according to an embodiment.
Fig. 2 is a schematic diagram of a three-electrode system for forming a conductive nanostructure.
Fig. 3 is a schematic diagram of a charge/discharge device.

### Description of Embodiments

Hereinafter, embodiments of the present invention will be described in detail. Note that, in the specification, the notation "a to b" in the description of the numerical range represents a or more and b or less unless otherwise specified. Furthermore, in the specification, a new numerical range can be provided by freely combining the definition of the lower limit and the definition of the upper limit in the description of the numerical range.

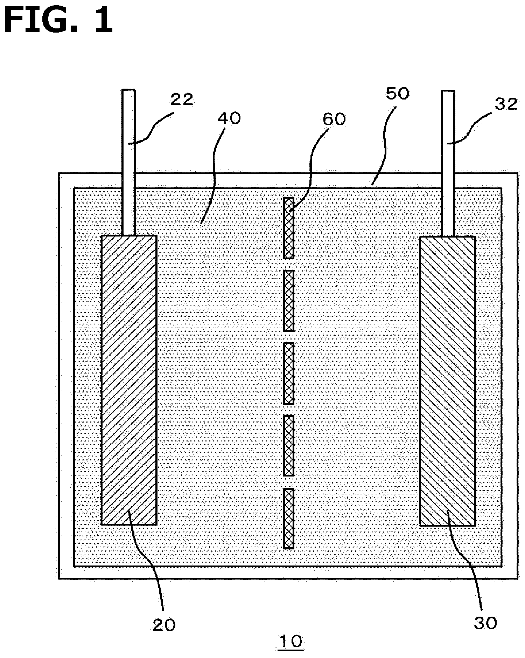

Fig. 1 illustrates a schematic view of a secondary battery 10 having a zinc negative electrode according to an embodiment. The secondary battery 10 having a zinc negative electrode has a positive electrode 20, a negative electrode 30, and an electrolytic solution 40. A container 50 keeps the positive electrode 20, the negative electrode 30, and the electrolytic solution 40 airtight. The positive electrode 20 and the negative electrode 30 are kept in isolation with a separator 60 interposed between them in the container 50.

In the secondary battery 10 having a zinc negative electrode, a positive electrode external terminal 22 and a negative electrode external terminal 32 are electrically connected to the positive electrode 20 and the negative electrode 30, respectively, and a part of the positive electrode external terminal 22 and a part of the negative electrode external terminal 32 are exposed to the outside of the container 50. The positive electrode external terminal 22 and the negative electrode external terminal 32 are electrically connected to an external circuit (load) or an external power supply.

In the container 50, a separator 60 may be provided between the positive electrode 20 and the negative electrode 30 for the purpose of, for example, preventing electrical contact between the positive electrode 20 and the negative electrode 30.

As the separator 60, a separator (for example, an insulating nonwoven fabric, an insulating porous film and ion-permeable porous film) usually used in a secondary battery having a zinc negative electrode can be used. For example, the material for the separator 60, thickness and size thereof can be appropriately varied according to the electrical configuration of the secondary battery 10 having a zinc negative electrode.

The secondary battery 10 having a zinc negative electrode may have a plurality of units each consisting of an electrical configuration having the positive electrode 20, the negative electrode 30, and the electrolytic solution 40. In this case, the plural units are electrically connected in series or in parallel.

Although not illustrated, the secondary battery 10 having a zinc negative electrode may have a structure in which the positive electrode 20 and the negative electrode 30 in the form of a sheet with the insulating separator 60 interposed between them are rolled and placed in the container 50 together with the electrolytic solution 40. With the configuration, it is possible to improve the electric capacity per unit volume of the secondary battery 10 having a zinc negative electrode.

Other electrical configurations in the secondary battery 10 having a zinc negative electrode are not particularly limited, and configurations applied to common secondary batteries having a zinc negative electrode can be appropriately installed.

### (Positive Electrode)

The positive electrode 20 has a metal fiber sheet. Examples of the material for the metal fiber sheet include conductive metals such as copper, nickel, molybdenum, iron, and steel (stainless steel). From the viewpoint of conductivity, the metal fiber sheet is preferably formed of copper.

Note that, the term "having conductivity" refers to having an electric resistivity of 1 × 10¹⁰ Ω·m or less. The conductivity can be measured in accordance with a known method, for example, the method of JIS C2139: 2008.

Note that the metal fiber sheet may contain a component other than a metal as long as the effect of the present invention is not impaired.

A metal oxide film formed of an oxide of a metal constituting the metal fiber sheet may be formed on a surface of the metal fiber sheet. When the metal fiber sheet is formed of copper, the metal oxide film is formed of copper oxide.

The average fiber diameter, density (basis weight), thickness and others of the metal fibers constituting the metal fiber sheet, can be appropriately changed in consideration of, e.g., rigidity, conductivity and electric capacity.

The average fiber diameter of the metal fibers is, for example, preferably 1 µm or more, 2 µm or more, 5 µm or more, 10 µm or more, or 15 µm or more; and preferably 100 µm or less, 70 µm or less, 50 µm or less, or 30 µm or less. The average fiber length of the metal fibers may have a sufficient length to form the metal fiber sheet, and is not particularly limited as long as it can be appropriately set within a range commonly known. The average fiber length of the metal fibers falls, preferably within the range of, for example, 1 mm to 10 mm, and more preferably within the range of 3 mm to 5 mm. Note that the values of "average fiber diameter" and the "average fiber length" in the specification are obtained by measuring 20 fibers under a microscope and averaging the measured values.

The basis weight of the metal fibers is preferably, for example, 10 g/m² or more, 50 g/m² or more, 100 g/m² or more, or 200 g/m² or more; and 1000 g/m² or less, 700 g/m² or less, or 500 g/m² or less.

The metal fiber sheet may be processes according to performance and use, that is, e.g., holes or cuts for installation may be provided.

The metal fiber sheet can be produced by, for example, subjecting metal fibers to wet sheet-forming. Examples of the sheet obtained by wet sheet-forming of a metal fiber include a metal fiber sintered sheet prepared by the method disclosed in JP 07-258706 A.

The metal fiber sheet can be formed of a metal fiber such as a copper fiber. The size and distribution of holes and gaps can be controlled and the formed sheet can be further processed, that is, secondary processing into various shapes, can be made. Accordingly, the metal fiber sheet has a wide range of usage and thus suitable.

The space factor of the fibers in the metal fiber sheet preferably falls within the range of 5 to 50%, and more preferably 15% to 40%.

The "space factor of fibers in the metal fiber sheet" in the specification refers to a ratio of a portion where fibers are present relative to the volume of the metal fiber sheet. When a metal fiber sheet is composed of only a single type of metal fiber, the space factor is calculated by the following equation based on the basis weight and thickness of the metal fiber sheet and the true density of the metal fibers. Space factor (%) = basis weight of metal fiber sheet/(thickness of metal fiber sheet × true density of metal fiber) × 100

Note that when the metal fiber sheet contains another type of metal fiber or a fiber other than metal fiber, the space factor can be calculated by employing a true density value reflecting the composition ratio.

### <Conductive Nanostructures>

A metal fiber sheet having a conductive nanostructure at the positive electrode 20 may be used. The metal fiber sheet having a conductive nanostructure is obtained by using a metal fiber sheet as described above as a substrate and forming a conductive nanostructure on a surface of the metal fiber constituting the substrate. In other words, the metal fiber sheet having a conductive nanostructure has a metal nanowire electrically connected to the metal fiber. In this case, one of the ends of the metal nanowire is fixed to the metal fiber.

The conductive nanostructure (metal nanowire) is preferably formed of one or more metals selected from the group consisting of cobalt, copper, and silver. Note that, on the surfaces of these metals, layers of oxides of the metals may be formed.

Examples of the shape of the conductive nanostructure include, but are not particularly limited to, a granular shape such as a polygonal shape, a circular shape, or an elliptical shape; a plate shape such as a polygonal shape, a circular shape, or an elliptical shape; needle-like shape; columnar shape such as a polygonal shape, a circular shape, and an elliptical shape; fibrous shape; dendrite shape; a skeleton crystal shape developed during crystal growth. A shape (composite structure) formed of these in combination may be employed.

Examples of the composite structure include a dendritic structure, which is formed, for example, by repeatedly growing a fibrous structure in such a manner that a fibrous structure is branched from a fibrous structure, a fibrous structure is further branched from the resultant branched structure. Such a complicated structure repeat can significantly increase the surface area of the conductive nanostructure formed on the porous conductor and the discharge capacity and the durability to repeated use can be improved.

The nano-size structure refers to a conductive nanostructure having at least one of the sides (diameter or short axis in cross section) of less than 1 µm. Similarly, the micron-size structure refers to a structure having one of the sides (diameter or short axis in cross section) of 0.001 to 1 mm.

The size of the conductive nanostructure is not particularly limited. For example, in the case of a dendritic conductive nanostructure, the size of the entire dendritic structure may be a micron level, and it is satisfactory if the size of at least a branch portion thereof is a nano level. In other words, the conductive nanostructure itself is not limited in size as long as a nano-size structure is at least partially present.

As another example where a conductive nanostructure is fibrous, it is satisfactory that the size of at least the minor radius (or minor axis) of the cross section is a nano level. In this case, the length of the fiber is not limited as long as the effect of the present invention is not impaired. For example, the size of the entire conductive nanostructure, i.e., the maximum length of the conductive nanostructure from the porous conductor surface can be 0.001 to 1000 µm and preferably 0.01 to 500 µm.

Alternatively, in a case where the conductive nanostructure is a composite, the size of the nano-sized portion constituting of the conductive nanostructure is as follows. The length of at least one of the sides constituting the nano-sized structure (diameter or minor axis in cross section) can be less than 1 µm, preferably 1 to 500 nm, and more preferably 5 to 300 nm.

The size of the conductive nanostructure is measured by means of, for example, a SEM (in accordance with, e.g., JIS K0132: 1997) or a transmission electron microscope (TEM: in accordance with JIS H7804: 2004), although the means varies depending on the size of the conductive nanostructure. In addition, a plurality of measurement means can be used in combination.

### <Method for Manufacturing Positive Electrode>

The metal fiber sheet used for the positive electrode 20 can be produced, for example, by wet sheet-forming of a metal fiber. Examples of the sheet obtained by wet sheet-forming of a metal fiber include a metal fiber sintered sheet prepared by the method disclosed in JP 07-258706 A.

The metal fiber sheet having a conductive nanostructure and used for the positive electrode 20 can be manufactured by a known method. Examples of the method include a vapor deposition method, a self-assembly method, a method using lithography, electron beam processing, FIB processing, and an electrochemical method. Of them, an electrochemical method is more suitably used since the production cost itself is low and simple and inexpensive equipment is used. Further suitably, the method for producing a copper nanostructure according to Japanese Patent No. 5574158 is used. Similarly, the method disclosed in WO 2019/059238 is suitably applied. It is preferable that a conductive nanostructure is electrochemically formed directly on the surface of the metal fiber constituting the metal fiber sheet.

Next, as a preferable example of a method for producing a metal fiber sheet having a conductive nanostructure to be used for the positive electrode 20, a method for forming a copper nanostructure by a three-electrode system will be described.

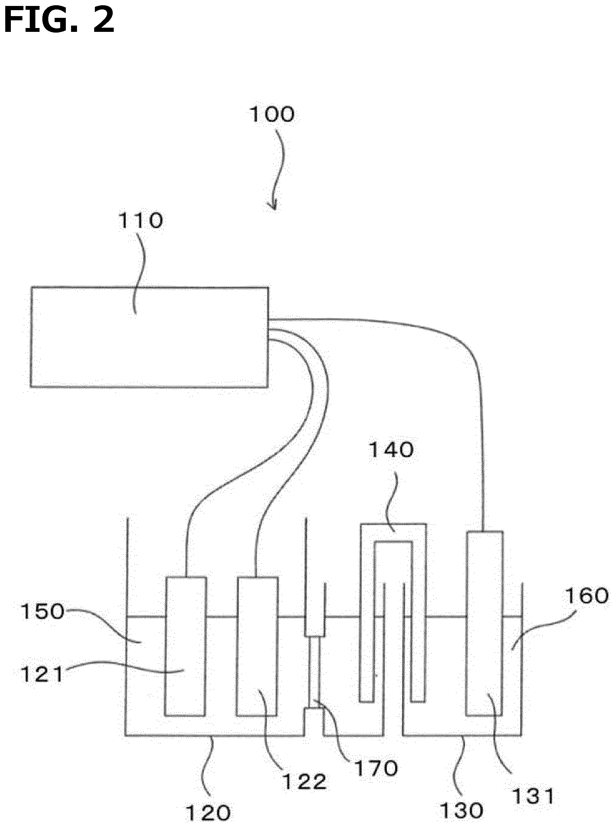

As illustrated in Fig. 2, a three-electrode cell device 100 composed of a power supply 110, a main chamber 120 provided with a working electrode 121 and a counter electrode 122, an auxiliary chamber 130, a salt bridge 140, and a reference electrode 131 is used.

The power supply 110 is not particularly limited and preferably a potentiostat. The potentiostat is a device for maintaining the potential of the working electrode 121 at a constant level with respect to the reference electrode 131, and has a mechanism where the potential between the working electrode 121 and the counter electrode 122 is accurately measured and almost no current is applied to the reference electrode 131.

A metal fiber sheet is used for the working electrode 121. The counter electrode 122 is not particularly limited, and a known material can be used. For example, platinum can be used. The reference electrode 131 is not particularly limited as long as it is a known reference electrode. For example, a saturated calomel electrode (SCE) can be used.

The main chamber 120 contains an electrolytic solution 150 prepared from tetraamminecopper (II) sulfate or copper (II) sulfate as a copper complex, lithium sulfate, and ammonia water in distilled water. The auxiliary chamber 130 contains an electrolytic solution 160 prepared from lithium sulfate and ammonia water in distilled water. The electrolytic solution 150 in a section partitioned by a glass filter 170 in the main chamber 120 is electrically connected to the electrolytic solution 160 by the salt bridge 140.

Two-electron reduction of tetraamminecopper (II) sulfate or copper (II) sulfate occurs by application of a voltage of -1.0 V to -2.0 V to the reference electrode 131 to supply an electrical quantity of 0.10 to 20 C/cm² to deposit copper on the metal fiber sheet serving as the working electrode 121 to form a nanostructure. At this time, a current is supplied for 0.1 to 120 minutes, with the result that a metal fiber sheet having a conductive nanostructure on the surface and inside can be obtained.

### (Negative Electrode)

The negative electrode 30 is formed of zinc. In other words, the negative electrode 30 contains zinc. The shape of the negative electrode 30 is not particularly limited, but is typically a plate-like or a foil-like.

### (Electrolytic Solution)

The electrolytic solution 40 is an aqueous solution having at least one or more types of supporting electrolytes dissolved therein. Here, the "supporting electrolyte" is an electrolyte for imparting conductivity to the electrolytic solution 40. Examples thereof include not only salts such as sulfate ions and carbonate ions but also metal hydroxides such as KOH. The total concentration of the supporting electrolytes in the electrolytic solution 40 is 5 mass% or more and 50 mass% or less, preferably 7 mass% or more and 45 mass% or less, and more preferably 35 mass% or more and 44 mass% or less, based on the entire electrolytic solution 40.

At least one of the supporting electrolytes preferably satisfies the following (a).
(a) A valence V of an anion derived from the supporting electrolyte is 2 or more.

The anion derived from the supporting electrolyte is preferably selected from the group consisting of a sulfate ion, a carbonate ion, a nitrate ion, a sulfite ion, a perchlorate ion, a tetrafluoroborate ion, and a hexafluorophosphate ion. The cation derived from the supporting electrolyte is preferably selected from the group consisting of a lithium ion, a sodium ion, a potassium ion, and a calcium ion.

When the electrolytic solution contains an anion having a valence of 2 or more derived from a supporting electrolyte and an anion having an anion valence of 1 derived from a supporting electrolyte, the ratio (monovalent anion/divalent anion) of the mol concentration of the monovalent anion derived from a supporting electrolyte relative to the mol concentration of the divalent or higher anion derived from a supporting electrolyte in the electrolytic solution (alternatively, the ratio of the mol concentration of the supporting electrolyte releasing the monovalent anion relative to the mol concentration of the supporting electrolyte releasing the divalent or higher valent anion) is preferably 0.100 or less, 0.080 or less, or 0.050 or less. The lower limit value of this ratio is, for example, 0.001, 0.005, or 0.010.

The anion derived from the supporting electrolyte may contain an organic anion other than the inorganic anions described above. In other words, the supporting electrolyte may be a component releasing an organic anion. Examples of the organic anion include a carboxylate ion, a sulfate ion, and a sulfonate ion. When the organic anion has a hydrocarbon group (may be saturated or unsaturated), the organic anion may be linear, branched, or cyclic. In this case, the number of carbon atoms of the hydrocarbon group is, for example, preferably 20 or less or 18 or less; and preferably 4 or more, 6 or more, 8 or more, or 10 or more. The organic anion may have an aromatic ring.

When the electrolytic solution contains an inorganic anion derived from a supporting electrolyte and an organic anion derived from a supporting electrolyte, the ratio (organic anion/inorganic anion) of the mol concentration of the organic anion relative to the mol concentration of the inorganic anion (alternatively, the molar concentration of the supporting electrolyte releasing the organic anion relative to the molar concentration of the supporting electrolyte releasing the inorganic anion) is preferably 0.100 or less, 0.080 or less, or 0.050 or less. The lower limit value of the ratio is, for example, 0.001, 0.005, or 0.010.

A supporting electrolyte may contain a component having a function as a surfactant. In other words, the supporting electrolyte may contain an ionic surfactant.

The ionic surfactant to be contained as the supporting electrolyte is preferably an anionic surfactant. Examples of the anionic surfactant include sodium dodecylbenzene sulfonate, sodium dodecyl sulfate (SDS), potassium dodecyl sulfate, sodium 2-ethylhexyl sulfate, sodium myristate, sodium laurate, sodium oleate, sodium stearate, sodium palmitate, potassium palmitate, sodium dodecanoate, potassium dodecanoate, sodium decanoate, and potassium decanoate. Of them, the ionic surfactant is preferably sodium dodecylbenzene sulfonate or sodium dodecyl sulfate, and more preferably sodium dodecyl sulfate. Note that, the anionic surfactants exemplified herein correspond to the supporting electrolytes releasing organic anions as described above. Due to the content of such an ionic surfactant, it becomes easy to suppress formation of a dendrite in the negative electrode at the time of charge or discharge of the secondary battery 10 having a zinc negative electrode, with the result that the charge/discharge continuity can be enhanced. In particular, combination use of an ionic surfactant (preferably, an anionic surfactant such as sodium dodecyl sulfate) with a supporting electrolyte releasing an inorganic anion as described above can further enhance charge/discharge continuity.

The concentration (mass%) of an ionic surfactant in the electrolytic solution is preferably 0.10 mass% or more, 0.15 mass% or more, or 0.20 mass% or more, and preferably 1.00 mass% or less, 0.80 mass% or less, or 0.60 mass% or less based on the entire electrolytic solution. From another viewpoint, the concentration (mass%) of an ionic surfactant relative to the concentration (mass%) of the entire supporting electrolytes in an electrolytic solution is preferably 0.005 or more, 0.010 or more, or 0.015 or more, and preferably 0.100 or less, 0.080 or less, or 0.060 or less. From still another viewpoint, the molar concentration of an ionic surfactant in an electrolytic solution is preferably 0.001 mol/L or more, 0.005 mol/L or more, 0.008 mol/L or more, or 0.010 mol/L or more, and preferably 0.500 mol/L or less, 0.200 mol/L or less, 0.100 mol/L or less, or 0.050 mol/L or less, based on the entire mass of the electrolytic solution.

The pH of the electrolytic solution 40 is preferably 13 or more (strong alkali) or 4 or more and less than 7 (acidic). The upper limit of the pH when the electrolytic solution 40 is a strong alkali is not particularly limited, but is usually 16 or less.

When the pH of the electrolytic solution 40 is 13 or more, the electrolyte preferably contains KOH and K₂CO₃ as supporting electrolytes.

When the pH of the electrolytic solution 40 is 4 or more and less than 7, the electrolyte preferably contains zinc sulfate as a supporting electrolyte.

Note that, the temperature of the electrolytic solution 40 at the time of pH measurement is normal temperature.

When the supporting electrolyte contains zinc sulfate, the supporting electrolyte preferably further contains sodium sulfate. In this case, in the electrolytic solution 40, the ratio of the mol concentration of sodium sulfate to the mol concentration of zinc sulfate (sodium sulfate/zinc sulfate) is preferably 2.0 or less, 1.5 or less, or 1.2 or less, and preferably 0.1 or more, 0.2 or more, or 0.5 or more.

According to the secondary battery 10 having a zinc negative electrode described above, the charge/discharge continuity can be enhanced.

The reason why the charge/discharge continuity is enhanced is as follows.

When the total concentration of the supporting electrolytes in the electrolytic solution 40 is set at 5 mass% or more based on the entire electrolytic solution 40, deterioration of the electrode can be suppressed, and finally charge/discharge continuity can be enhanced. In addition, ions derived from the supporting electrolytes surround the surface of the negative electrode 30, and ions that deteriorate the negative electrode 30 are less likely to come closer to the negative electrode 30. As a result, charge/discharge continuity can be enhanced.

In addition, when the total concentration of the supporting electrolytes in the electrolytic solution 40 is set at 5 mass% or more based on the entire electrolytic solution 40, the electrical conductivity of the electrolytic solution 40 increases, and the electrical resistance of the electrolytic solution 40 decreases. As a result, the reaction rate of the electrode reaction increases, and finally, the capacity of the secondary battery 10 having a zinc negative electrode increases.

On the other hand, when the total concentration of the supporting electrolytes in the electrolytic solution 40 is set at 50 mass% or less based on the entire electrolytic solution 40, the mobility of ions in the electrolytic solution 40 can be sufficiently increased within a range where the solution viscosity is not increased.

The embodiments of the present invention have been described above but these are examples of the present invention but various constitutions other than those mentioned above can be employed.

### Examples

Hereinafter, the present invention will be described with reference to Examples and Comparative Examples, but the present invention is not limited to these.

The cell configurations of the secondary batteries having a zinc negative electrode of Examples 1 to 6 and Comparative Example 1 will be described.

### (Example 1)

### <Positive Electrode>

As a positive electrode of Example 1, a copper fiber sheet was used, which has a fiber diameter of 18 µm, a thickness of 100 µm, a basis weight of 300 g/m², and a space factor of 34% and obtained by paper-forming and sintered. The copper fiber sheet was shaped to have a size of 2.5 cm long × 1 cm wide.

### <Negative Electrode>

As the negative electrode of Example 1, a plate-like zinc molded into a shape having a size of 2.5 cm long × 1 cm wide × 0.2 cm thick was used.

### <Electrolytic Solution>

As an electrolytic solution of Example 1, an electrolytic solution containing KOH (concentration: 0.3 mol/L, 1.0 mass%) and K₂CO₃ (Concentration 5 mol/L, 40.5 mass%) as the supporting electrolytes was used. The pH of the electrolytic solution of Example 1 was 15.4.

### (Example 2)

### <Positive Electrode>

A positive electrode of Example 2 is the same as the positive electrode of Example 1.

### <Negative Electrode>

The negative electrode of Example 2 is the same as the negative electrode of

### Example 1.

### <Electrolytic Solution>

As an electrolytic solution of Example 2, an electrolytic solution containing KOH (Concentration: 0.5 mol/L, 1.6 mass%) and K₂CO₃ (Concentration 5 mol/L, 40.2 mass%) as the supporting electrolytes was used. The pH of the electrolytic solution of Example 2 was 15.4.

### (Example 3)

### <Positive Electrode>

A metal fiber sheet having a cobalt-based conductive nanostructure was produced as a positive electrode of Example 3 based on the following procedure.

### <Negative Electrode>

The negative electrode of Example 3 is the same as the negative electrode of Example 1.

### <Electrolytic Solution>

The electrolytic solution of Example 3 is the same as the electrolytic solution of Example 2.

### [Preparation of Electrolytic Solution for Forming Conductive Nanostructure]

### (Hexaamminecobalt (III) chloride electrolytic solution)

Hexaamminecobalt (III) chloride (0.508 g) (purity: 99% or more, manufactured by Aldrich) and a supporting electrolyte, lithium sulfate (1.28 g) (purity: 99.0%, manufactured by Wako Pure Chemical Industries, Ltd.) were dissolved in 100 mL of distilled water. The solution was stirred for 30 minutes by a magnetic stirrer to prepare an electrolytic solution having a hexaamminecobalt concentration of 19 mM (the concentration of lithium sulfate was 0.1 M).

### [Apparatus for Producing Metal Fiber Sheet Having Conductive Nanostructure]

An evaluation sample having a conductive nanostructure was prepared using the three-electrode system shown in Fig. 2. To a potentiostat (Model HAB-151 manufactured by HOKUTO DENKO CORPORATION) was used as a power supply, a cell of a three-electrode system was connected, as shown in Fig. 2. The electrolytic solution prepared above was put in the main chamber of the electrolysis cell. An aqueous electrolyte solution having 0.1 M lithium sulfate dissolved therein was put in the auxiliary chamber. Also in the auxiliary chamber, the reference electrode was soaked. The main chamber and the auxiliary chamber are electrically connected by a salt bridge.

To the working-electrode terminal of the potentiostat, a copper fiber sheet (2.5 cm long × 1 cm wide × 100 µm thick) similar to that in Example 1 was connected. To the counter-electrode terminal, a platinum plate was connected. To the reference-electrode terminal, a silver-silver chloride electrode (Model RE-1CP manufactured by BAS, hereinafter abbreviated as Ag/AgCl) was connected. The area of the copper fiber sheet to be soaked in the electrolytic solution was controlled to be 1 cm².

### [Production of Metal Fiber Sheet Having Conductive Nanostructure]

A potential of -1.07 V was applied to the working electrode to supply an electrical quantity of 3.0 C/cm². At this time, three-electron reduction of hexaamminecobalt (III) ions occurs to deposit cobalt. At the same time, since ammonia acts as a shape control agent, cobalt is deposited not as a simple film but as a nanowire different in shape such as a dendrite-, fiber-, rod- or needle-like shape. After completion of the electrolysis, the substrate having the cobalt nanowire formed there on was taken out from the electrolytic solution and repeatedly washed with distilled water to obtain a metal fiber sheet having a conductive nanostructure.

### (Example 4)

### <Positive Electrode>

A positive electrode of Example 4 was produced by the following procedure.

The surface of a copper fiber sheet (2.5 cm long × 1 cm wide × 100 µm thick) similar to that in Example 1 was oxidized by electrolytic oxidation to form a copper fiber sheet coated with the copper (II) oxide-film, i.e., a coating film formed of copper (II) oxide.

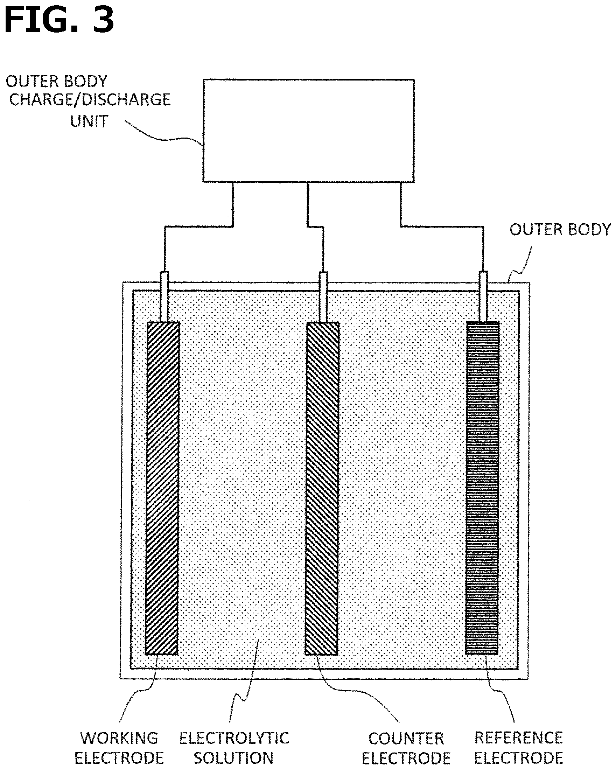

Specifically, an aqueous electrolyte solution having 0.2 M KOH dissolved therein was put in the main chamber of a cell of the three-electrode system as shown in Fig. 3. A platinum plate and a mercury-mercury oxide electrode (Hg/HgO) were used for a negative electrode (counter electrode) and a reference electrode, respectively.

Three cycles of a current charge/discharge test were performed by applying a potential of 0 to 2.0 V to the positive electrode (working electrode) with respect to the reference electrode to supply a current having a current density of 5 mA/cm². After completion of the charge process of the third cycle, copper (II) oxide was formed on the surface of the copper fiber sheet.

### <Negative Electrode>

The negative electrode of Example 4 is the same as the negative electrode of Example 1.

### <Electrolytic Solution>

As an electrolytic solution in Example 4, an electrolytic solution containing zinc sulfate (concentration 2 mol/L, 24.4 mass%) as a supporting electrolyte was used. The pH of the electrolytic solution of Example 4 was 4.8.

### (Example 5)

### <Positive Electrode>

A positive electrode of Example 5 was produced by the following procedure.

A copper fiber sheet (2.5 cm long × 1 cm wide × 100 µm thick) similar to that in Example 1 was oxidized by heating at 200°C for 3 hours in the atmosphere to obtain a copper fiber sheet coated with the copper (I) oxide film, i.e., film formed of a copper (I) oxide.

### <Negative Electrode>

The negative electrode of Example 5 is the same as the negative electrode of Example 1.

### <Electrolytic Solution>

As an electrolytic solution of Example 5, an electrolytic solution containing zinc sulfate (concentration: 0.5 mol/L, 7.5 mass%) as a supporting electrolyte was used. The pH of the electrolytic solution of Example 5 was 5.5.

### (Example 6)

### <Positive Electrode>

A metal fiber sheet having a copper-based conductive nanostructure was produced as a positive electrode of Example 6 based on the following procedure.

### <Negative Electrode>

The negative electrode of Example 6 is the same as the negative electrode of Example 1.

### <Electrolytic Solution>

As an electrolytic solution in Example 6, an electrolytic solution containing zinc sulfate (concentration: 0.5 mol/L, 7.5 mass%) as a supporting electrolyte was used. The pH of the electrolytic solution of Example 6 was 5.5.

### [Preparation of Electrolytic Solution for Forming Conductive Nanostructure]

### (Electrolytic solution of tetraamminecopper (II) sulfate)

Tetraamminecopper (II) sulfate (0.31 g) (purity 98%, manufactured by Aldrich) and a supporting electrolyte, lithium sulfate (0.64 g) (purity: 99.0%, manufactured by Wako Pure Chemical Industries, Ltd.) were dissolved in 40.2 mL of distilled water. To this solution, 9.8 mL of ammonia water (aqueous solution having an ammonia content of 29%, manufactured by KANTO CHEMICAL CO., INC.) was added. The mixture was stirred by a magnetic stirrer for 30 minutes to obtain an electrolytic solution for forming a conductive nanostructure having a concentration of tetraamminecopper (II) sulfate of 25 mM.

### [Apparatus for Producing Metal Fiber Sheet Having Conductive Nanostructure]

An evaluation sample having a conductive nanostructure was prepared using the three-electrode system shown in Fig. 2. To a potentiostat (Model HAB-151 manufactured by HOKUTO DENKO CORPORATION) used as a power supply, a cell of the three-electrode system was connected, as shown in Fig. 2. The electrolytic solution prepared above was put in the main chamber of the electrolysis cell. An electrolytic solution, in which only tetraamminecopper (II) sulfate was removed from the electrolytic solution prepared above, was prepared and put in the auxiliary chamber.

A metal fiber sheet (2.5 cm long × 1 cm wide × 100 µm thick) similar to that in Example 1 was used as the working electrode terminal of the potentiostat, a platinum plate was connected to the counter-electrode terminal, and a mercury-mercury oxide electrode (Model RE-61AP manufactured by BAS, hereinafter abbreviated as Hg/HgO) was connected to the reference-electrode terminal.

### [Production of Metal Fiber Sheet Having Conductive Nanostructure]

A potential of -1.45 V was applied to the working electrode to supply an electric quantity of 2.0 C/cm². In the metal fiber sheet of the working electrode put in the main chamber of the electrolysis cell, two-electron reduction of the tetraamminecopper (II) sulfate occurs at this time to deposit copper. At the same time, since ammonia acts as a shape control agent, copper is deposited not as a simple film but as a nanowire different in shape such as a dendrite-, fiber-, rod- or needle-like shape. After completion of the electrolysis, the metal fiber sheet substrate having the copper nanowire formed thereon was taken out from the electrolytic solution and repeatedly washed with distilled water to obtain a metal fiber sheet having a conductive nanostructure.

The obtained metal fiber sheet was oxidized by heating at 200°C for 3 hours in the atmosphere to obtain a copper fiber sheet coated with the copper (I) oxide film, i.e., film formed of a copper (I) oxide, and having a conductive nanostructure.

### (Comparative Example 1)

### <Positive Electrode>

The positive electrode of Comparative Example 1 is the same as the positive electrode of Example 1.

### <Negative Electrode>

The negative electrode of Comparative Example 1 is the same as the negative electrode of Example 1.

### <Electrolytic Solution>

As an electrolytic solution of Comparative Example 1, an electrolytic solution containing LiOH (concentration: 0.2 mol/L, 0.5 mass%) as a supporting electrolyte was used. The pH of the electrolytic solution of Comparative Example 1 was 12.5.

### (Example 7)

### <Positive Electrode>

The positive electrode of Example 7 is the same as the positive electrode of Example 4.

### <Negative Electrode>

The negative electrode of Example 7 is the same as the negative electrode of Example 1.

### <Electrolytic Solution>

As the electrolytic solution of Example 7, the concentrations of individual components in the electrolytic solution using the electrolytic solution containing zinc sulfate as a supporting electrolyte and the pH of the electrolytic solution and others are as shown in Table 1.

### (Example 8)

### <Positive Electrode>

The positive electrode of Example 8 is the same as the positive electrode of Example 1.

### <Negative Electrode>

The negative electrode of Example 8 is the same as the negative electrode of Example 1.

### <Electrolytic Solution>

As the electrolytic solution of Example 8, an electrolytic solution containing zinc sulfate as a supporting electrolyte was used. The concentrations of individual components in the electrolytic solution, the pH of the electrolytic solution, and others are as shown in Table 1.

### (Example 9)

### <Positive Electrode>

A metal fiber sheet having a conductive nanostructure was produced in the same manner as in Example 6 except that the copper fiber sheet was neither heated nor oxidized for the positive electrode of Example 9.

### <Negative Electrode>

The negative electrode of Example 9 is the same as the negative electrode of Example 1.

### <Electrolytic Solution>

As the electrolytic solution of Example 9, an electrolytic solution containing zinc sulfate and sodium sulfate as supporting electrolytes and further containing sodium dodecyl sulfate as other components was used. The concentrations of individual components in the electrolytic solution, the pH of the electrolytic solution, and others are as shown in Table 1.

### (Example 10)

### <Positive Electrode>

The positive electrode of Example 10 is the same as the positive electrode of Example 9.

### <Negative Electrode>

The negative electrode of Example 10 is the same as the negative electrode of Example 1.

### <Electrolytic Solution>

As the electrolytic solution of Example 10, an electrolytic solution containing zinc sulfate as a supporting electrolyte and further containing sodium dodecyl sulfate as other components was used. The concentrations of individual components in the electrolytic solution, the pH of the electrolytic solution, and others are as shown in Table 1.

### (Example 11)

### <Positive Electrode>

The positive electrode of Example 11 is the same as the positive electrode of Example 3.

### <Negative Electrode>

The negative electrode of Example 11 is the same as the negative electrode of Example 1.

### <Electrolytic Solution>

As the electrolytic solution of Example 11, an electrolytic solution containing zinc sulfate and sodium sulfate as supporting electrolytes and further containing sodium dodecyl sulfate as other components was used. The concentrations of individual components in the electrolytic solution, the pH of the electrolytic solution, and others are as shown in Table 1.

### (Example 12)

### <Positive Electrode>

The positive electrode of Example 12 is the same as the positive electrode of Example 3.

### <Negative Electrode>

The negative electrode of Example 12 is the same as the negative electrode of Example 1.

### <Electrolytic Solution>

As the electrolytic solution of Example 12, an electrolytic solution containing zinc sulfate and sodium sulfate as supporting electrolytes and further containing sodium dodecyl sulfate as other components was used. The concentrations of individual components in the electrolytic solution, the pH of the electrolytic solution, and others are as shown in Table 1.

### (Example 13)

### <Positive Electrode>

The positive electrode of Example 13 is the same as the positive electrode of Example 3.

### <Negative Electrode>

The negative electrode of Example 13 is the same as the negative electrode of Example 1.

### <Electrolytic Solution>

As the electrolytic solution of Example 13, an electrolytic solution containing zinc sulfate as a supporting electrolyte and further containing sodium dodecyl sulfate as other components was used. The concentrations of individual components in the electrolytic solution, the pH of the electrolytic solution, and others are as shown in Table 1.

### (Example 14)

### <Positive Electrode>

The positive electrode of Example 14 is the same as the positive electrode of Example 3.

### <Negative Electrode>

The negative electrode of Example 14 is the same as the negative electrode of Example 1.

### <Electrolytic Solution>

As the electrolytic solution of Example 14, an electrolytic solution containing zinc sulfate and sodium sulfate as supporting electrolytes, as supporting electrolytes, and further containing sodium dodecyl sulfate as other components was used. The concentrations of individual components in the electrolytic solution, the pH of the electrolytic solution, and others are as shown in Table 1.

### (Example 15)

### <Positive Electrode>

A metal fiber sheet having a silver-based conductive nanostructure was produced as a positive electrode of Example 15 based on the following procedure.

### <Negative Electrode>

The negative electrode of Example 15 is the same as the negative electrode of Example 1.

### <Electrolytic Solution>

As the electrolytic solution of Example 15, an electrolytic solution containing zinc sulfate and sodium sulfate as supporting electrolytes, and further containing sodium dodecyl sulfate as other components was used. The concentrations of individual components in the electrolytic solution, the pH of the electrolytic solution, and others are as shown in Table 1.

### [Preparation of Electrolytic Solution for Forming Conductive Nanostructure]

Silver nitrate (0.085 g) (purity: 99.8% or more, manufactured by KANTO CHEMICAL CO., INC.) and a supporting electrolyte, lithium sulfate (1.28 g) (purity: 99.0% or more, manufactured by Wako Pure Chemical Industries, Ltd.) were dissolved in 96 mL of distilled water. To this solution, 3.26 mL of NH₃ water (aqueous solution having an ammonia content of 29%, manufactured by KANTO CHEMICAL CO., INC.) was added, and the mixture was stirred with a magnetic stirrer for 30 minutes to obtain an electrolytic solution for forming a conductive nanostructure having a concentration of silver nitrate of 5 mM.

### [Apparatus for Producing Metal Fiber Sheet Having Conductive Nanostructure]

An evaluation sample having a conductive nanostructure was prepared using the three-electrode system of Fig. 3. A potentiostat (Model HAB-151 manufactured by HOKUTO DENKO CORPORATION) was used as a power supply, and a cell of the three-electrode system was connected as shown in Fig. 3. The electrolytic solution prepared above was put in the main chamber of the electrolysis cell. An electrolytic solution, in which only silver nitrate was removed from the electrolytic solution prepared above, was prepared, and put in an auxiliary chamber.

A metal fiber sheet substrate was used as the working-electrode terminal of the potentiostat, a platinum plate was connected to the counter-electrode terminal, and Hg/HgO was connected to the reference-electrode terminal.

### [Production of Metal Fiber Sheet Having Conductive Nanostructure]

A potential of -1.04 V was applied to the working electrode to supply an electrical quantity of 2.0 C/cm². At this time, one electron reduction of diammine silver (I) ions occurs to deposit silver. At the same time, since ammonia acts as a shape control agent, silver is deposited not as a simple film but as a dendritic nanowire. After completion of the electrolysis, the substrate having the silver nanowire formed thereon was taken out from the electrolytic solution and repeatedly washed with distilled water to obtain a metal fiber sheet having a conductive nanostructure.

### (Example 16)

### <Positive Electrode>

The positive electrode of Example 16 is the same as the positive electrode of Example 15.

### <Negative Electrode>

The negative electrode of Example 16 is the same as the negative electrode of Example 1.

### <Electrolytic Solution>

As the electrolytic solution of Example 16, an electrolytic solution containing zinc sulfate and sodium sulfate as supporting electrolytes, and further containing sodium dodecyl sulfate as other components was used. The concentrations of individual components in the electrolytic solution, the pH of the electrolytic solution, and others are as shown in Table 1.

### (Comparative Example 2)

### <Positive Electrode>

As the positive electrode of Comparative Example 2, a plate-like copper molded into a shape having a size of 2.5 cm long × 1 cm wide × 0.02 cm thick was used.

### <Negative Electrode>

The negative electrode of Comparative Example 2 is the same as the negative electrode of Example 1.

### <Electrolytic Solution>

The electrolytic solution of Comparative Example 2 is the same as the electrolytic solution of Example 1.

### (Comparative Example 3)

### <Positive Electrode>

The positive electrode of Comparative Example 3 is the same as the positive electrode of Example 1.

### <Negative Electrode>

As a negative electrode of Comparative Example 3, a plate-like iron molded into a shape having a size of 2.5 cm long × 1 cm wide × 0.02 cm thick was used.

### <Electrolytic Solution>

The electrolytic solution of Comparative Example 3 is the same as the electrolytic solution of Example 1.

### <Charge-Discharge Durability Evaluation Test>

A charge-discharge durability evaluation test was performed on each of the secondary batteries having a zinc negative electrode of Examples 1 to 16 and Comparative Examples 1 to 3. A charge and discharge unit (Model HJ1010mSM8A manufactured by HOKUTO DENKO CORPORATION) was used as a power supply. As the positive electrode, negative electrode, and electrolytic solution, the positive electrode, negative electrode, and electrolytic solution of each of Examples and Comparative Examples were used. The positive electrode and the negative electrode were set such that an area of 1 cm × 1 cm of each of them was soaked in the electrolytic solution. The polystyrene container was used as an outer container and sealed with a silicone plug to ensure airtightness. In this state, charge-discharge test was performed. The charge-discharge durability evaluation test was performed in an environment of 20°C.

A cycle test was performed by repeating charge and discharge. After the cycle test, the electrical capacity was measured. The measurement conditions for the cycle test, such as current density and the number of repeats, are as shown in Table 1.

**[Table 1]**

| | Positive electrode material | Structure | Nanowire | Components of electrolytic solution (supporting electrolytes) | Concentration (mol/L) | Concentration (mass%) | pH of electrolytic solution | Negative electrode material | Shape | Voltage range (V) | Number of charge/discharge cycles (times until capacity becomes almost zero) | Current density (mA/cm²) | Capacity after charging and discharging 300 times (mAh/cm²) | Capacity after charging and discharging 500 times (mAh/cm²) | Capacity after charging and discharging 800 times (mAh/cm²) | Maximum capacity (mAh/cm²) |
|---|---|---|---|---|---|---|---|---|---|---|---|---|---|---|---|---|
| Example 1 | Copper | Fiber sheet | Absent | KOH | 0.3 | 1.0 | 15.4 | Zinc | Plate | 0-2.0 | 1000 | 5 | 0.68 | 0.75 | 0.68 | 0.87 |
| | | | | K₂CO₃ | 5 | 40.5 | | | | | | | | | | |
| Example 2 | Copper | Fiber sheet | Absent | KOH | 0.5 | 1.6 | 15.4 | Zinc | Plate | 0-2.0 | 1000 | 5 | 0.8 | 0.8 | 0.8 | 1.99 |
| | | | | K₂CO₃ | 5 | 40.2 | | | | | | | | | | |
| Example 3 | Copper | Fiber sheet | Cobalt | KOH | 0.5 | 1.6 | 15.4 | Zinc | Plate | 0-2.0 | 600 | 5 | 1.3 | 1 | 0 | 2.81 |
| | | | | K₂CO₃ | 5 | 40.2 | | | | | | | | | | |
| Example 4 | Copper/copper (II) oxide | Fiber sheet | Absent | Zinc sulfate | 2 | 24.4 | 4.8 | Zinc | Plate | 0~1.09 | 911 | 3 | 0.9 | 0.75 | 0.6 | 1.02 |
| Example 5 | Copper/copper (I) oxide | Fiber sheet | Absent | Zinc sulfate | 0.5 | 7.5 | 5.5 | Zinc | Plate | 0∼1.15 | 1000 | 3 | 0.6 | 0.35 | 0.15 | 0.664 |
| Example 6 | Copper/copper (I) oxide | Fiber sheet | Cu/ Cu₂O | Zinc sulfate | 0.5 | 7.5 | 5.5 | Zinc | Plate | 0∼1.13 | 1000 | 3 | 0.35 | 0.4 | 0.4 | 0.634 |
| Comparative Examole 1 | Copper | Fiber sheet | Absent | LiOH | 0.2 | 0.5 | 12.5 | Zinc | Plate | 0~2.0 | 300 | 5 | 0.057 | 0 | 0 | 0.057 |
| Example 7 | Copper/copper (II) oxide | Fiber sheet | Absent | Zinc sulfate | 0.31 | 5 | 502 | Zinc | Plate | 0∼1.15 | 1000 | 3 | 0.404 | 0.459 | 0.111 | 0.489 |
| Example 8 | Copper | Fiber sheet | Absent | Zinc sulfate | 0.5 | 7.5 | 5.5 | Zinc | Plate | 0∼1.13 | 1000 | 3 | 0.402 | 0.545 | 0.516 | 0.563 |
| Example 9 | Copper | Fiber sheet | Cu | Zinc sulfate | 0.5 | 7.5 | 4.94 | Zinc | Plate | 0∼1.107 | 864 | 3 | 1.24 | 1.47 | 1.59 | 1.59 |
| | | | | Sodium sulfate | 0.5 | 6.7 | | | | | | | | | | |
| Example 10 | Copper | Fiber sheet | Cu | Zinc sulfate | 0.5 | 7.5 | 4.82 | Zinc | Plate | 0∼1.125 | 2000 | 3 | 0.348 | 0.711 | 0.778 | 0.88 |
| Example 11 | Copper | Fiber sheet | Cobalt | Zinc sulfate | 0.5 | 7.5 | 4.9 | Zinc | Plate | 0∼1.123 | 1000 | 3 | 1.57 | 1.41 | 1.45 | 1.82 |
| | | | | Sodium sulfate | 0.5 | 6.7 | | | | | | | | | | |
| Example 12 | Copper | Fiber sheet | Cobalt | Zinc sulfate | 0.5 | 7.5 | 4.9 | Zinc | Plate | 0∼1.103 | 2000 | 3 | 0.596 | 0.668 | 0.594 | 1.62 |
| | | | | Sodium sulfate | 0.4 | 5.4 | | | | | | | | | | |
| Example 13 | Copper | Fiber sheet | Cobalt | Zinc sulfate | 0.5 | 7.5 | 4.82 | Zinc | Plate | 0∼1.1235 | 1000 | 3 | 0.288 | 0.39 | 0.517 | 0.539 |
| Example 14 | Copper | Fiber sheet | Cobalt | Zinc sulfate | 0.5 | 7.5 | 4.99 | Zinc | Plate | 0∼1.125 | 1000 | 3 | 1.35 | 1.27 | 1.39 | 1.47 |
| | | | | Sodium sulfate | 0.5 | 6.7 | | | | | | | | | | |
| Example 15 | Copper | Fiber sheet | Silver | Zinc sulfate | 0.5 | 7.5 | 4.94 | Zinc | Plate | 0∼1.116 | 1429 | 3 | 1.27 | 202 | 2.06 | 2.22 |
| | | | | Sodium sulfate | 0.5 | 6.7 | | | | | | | | | | |
| Example 16 | Copper | Fiber sheet | Silver | Zinc sulfate | 0.5 | 7.5 | 4.9 | Zinc | Plate | 0∼1.112 | 1413 | 3 | 1.27 | 1.87 | 1.68 | 1.97 |
| | | | | Sodium sulfate | 0.4 | 5.4 | | | | | | | | | | |
| Comparative Example 2 | Copper | Plate | Absent | KOH | 0.3 | 1.0 | 15.4 | Zinc | Plate | 0-2.0 | 1000 | 5 | 0.0167 | 0.0181 | 0.0216 | 0.022 |
| | | | | K₂CO₃ | 5 | 40.5 | | | | | | | | | | |
| Comparative Example 3 | Copper | Fiber sheet | Absent | KOH | 0.3 | 1.0 | 15.4 | Iron | Plate | 0-2.0 | 1000 | 5 | 0.00158 | 0.0015 | 0.00139 | 0.022 |
| | | | | K₂CO₃ | 5 | 40.5 | | | | | | | | | | |

The secondary battery having a zinc negative electrode of Comparative Example 1 exhibited a small maximum capacity. In addition, the number of charge/discharge cycles was 300, and the charge/discharge continuity was insufficient. In contrast, in the secondary batteries having a zinc negative electrode of Examples 1, 2, and 4 to 6, the decrease in capacity was suppressed even when charging and discharging are performed more than 800 times. Thus, it was confirmed that the charge/discharge continuity is enhanced. The secondary battery having a zinc negative electrode of Example 3 was confirmed to have an advantage over Comparative Example 1 because the maximum capacity was high and the charge/discharge continuity was improved compared with Comparative Example 1.

Similarly, it was confirmed that Examples 1 to 16 are superior to Comparative Examples 1 to 3.

### Reference Signs List

- 10: secondary battery having a zinc negative electrode
- 20: positive electrode
- 22: positive electrode external terminal
- 30: negative electrode
- 32: negative electrode external terminal
- 40: electrolytic solution
- 50: container
- 60: separator
- 100: three-electrode system cell device
- 110: power supply
- 120: main chamber
- 121: working electrode
- 122: counter electrode
- 130: auxiliary chamber
- 131: reference electrode
- 140: salt bridge
- 150: electrolytic solution
- 160: electrolytic solution
- 170: glass filter

## Claims

1. A secondary battery having a zinc negative electrode comprising:
a positive electrode having a metal fiber sheet;
a negative electrode containing zinc; and
an electrolytic solution having at least one or more types of supporting electrolytes dissolved therein,
wherein a total concentration of the supporting electrolytes is 5 mass% or more and 50 mass% or less based on the entire electrolytic solution.

2. The secondary battery having a zinc negative electrode according to claim 1, wherein at least one of the supporting electrolytes satisfies the following (a):
(a) a valence V of an anion derived from the supporting electrolyte is 2 or more.

3. The secondary battery having a zinc negative electrode according to claim 1 or 2, wherein the anion derived from the supporting electrolyte is selected from the group consisting of a sulfate ion, a carbonate ion, a nitrate ion, a sulfite ion, a perchlorate ion, a tetrafluoroborate ion, and a hexafluorophosphate ion, and a cation derived from the supporting electrolyte is selected from the group consisting of a lithium ion, a sodium ion, a potassium ion, a calcium ion, and a zinc ion.

4. The secondary battery having a zinc negative electrode according to any one of claims 1 to 3, wherein the electrolytic solution has a pH of 13 or more, or 4 or more and less than 7.

5. The secondary battery having a zinc negative electrode according to claim 4, wherein when the pH of the electrolytic solution is 13 or more, the electrolytic solution contains KOH and K₂CO₃.

6. The secondary battery having a zinc negative electrode according to claim 4, wherein when the pH of the electrolytic solution is 4 or more and less than 7, the electrolytic solution contains zinc sulfate.

7. The secondary battery having a zinc negative electrode according to any one of claims 1 to 6, having a metal nanowire electrically connected to the metal fiber sheet.

8. The secondary battery having a zinc negative electrode according to claim 7, wherein one of end portions of the metal nanowire is fixed to the metal fiber sheet.

9. The secondary battery having a zinc negative electrode according to claim 7 or 8, wherein the metal nanowire is formed of one or more metals selected from the group consisting of cobalt, copper, and silver.

10. The secondary battery having a zinc negative electrode according to any one of claims 1 to 9, wherein the metal fiber sheet is formed of copper.

11. The secondary battery having a zinc negative electrode according to any one of claims 1 to 10, wherein a metal oxide film is formed on a surface of the metal fiber sheet.
